(19) Europäisches Patentamt
European Patent Office
Office européen des brevets

(11) EP 0 686 836 B1

(12) **EUROPÄISCHE PATENTSCHRIFT**

(45) Veröffentlichungstag und Bekanntmachung des Hinweises auf die Patenterteilung:
**29.01.1997 Patentblatt 1997/05**

(51) Int Cl.6: **G01K 17/06**, G01K 17/10

(21) Anmeldenummer: **95106692.7**

(22) Anmeldetag: **04.05.1995**

(54) **Wärmezähler**

Heat meter

Compteur de chaleur

(84) Benannte Vertragsstaaten:
**AT CH DE DK LI**

(30) Priorität: **10.06.1994 CH 1827/94**

(43) Veröffentlichungstag der Anmeldung:
**13.12.1995 Patentblatt 1995/50**

(73) Patentinhaber: **Landis & Gyr Technology Innovation AG**
**6301 Zug (CH)**

(72) Erfinder: **Gut, Fredy**
**CH-6003 Luzern (CH)**

(74) Vertreter: **Müller, Hans-Jürgen, Dipl.-Ing. et al**
**Müller, Schupfner & Gauger**
**Postfach 10 11 61**
**80085 München (DE)**

(56) Entgegenhaltungen:
DE-A- 3 608 689     DE-A- 3 617 061
DE-A- 3 626 281     DE-A- 3 626 557
DE-A- 3 900 008     FR-A- 2 461 938

• MEASUREMENT TECHNIQUES, Bd. 23, Nr. 1, Januar 1980 NEW YORK US, Seiten 71-75, A.T. LEBEDEV E.A. 'PRECISION NORMS AND TECHNIQUES FOR MEASURING THE QUANTITY OF RELEASED THERMAL ENERGY'

**Beschreibung**

Die Erfindung betrifft einen Wärmezähler.

Solche Wärmezähler eignen sich beispielsweise zur Erfassung der von einem Verbraucher aus einem Fernwärmenetz bezogenen Wärmeenergie, welche zur Heizung von Gebäuden wie auch zur Versorgung von Verbrauchem mit Heisswasser dient. Weiter sind solche Wärmezähler einsetzbar zur Erfassung der Wärmeverteilung in einem Gebäude, das von einer zentralen Heizungsanlage mit Wärme versorgt wird.

Ein Wärmezähler, der auf dem Prinzip der Ultraschallmessung basiert, ist bekannt aus der EP 496'953. Aus der EP 616 201 ist weiter ein Wärmezähler bekannt, der aus einem Grundgerät besteht, dessen Funktionen durch aufsteckbare Module erweiterbar sind.

Aus den CH 638'043, CH 637'476 und CH 637'475 sind Vorschläge bekannt, anstelle der bezogenen Wärmeenergie einen Wert kumulativ zu speichern, der die bezogene Wärmeenergie laufend mit einem Gewichtsfaktor multipliziert, wobei der gespeicherte Wert direkt der Preisbildung dient. Der Gewichtsfaktor hängt dabei von der Temperaturdifferenz zwischen dem Vorlauf und dem Rücklauf ab. Aus der CH 638'043 sind weiter Vorschläge bekannt geworden, den Vorlauftemperaturfühler bei einem System mit mehreren Wärmezählern durch einen einzigen, allen Wärmezählern gemeinsamen Vorlauftemperaturfühler zu ersetzen und anstelle der Messung der Rücklauftemperatur eine fiktive Rücklauftemperatur einzusetzen, die zur Verrechnung einer auch ungenutzte Energie beinhaltenden Wärmemenge führt. Allen diesen Vorschlägen haftet der Nachteil an, dass nicht ersichtlich ist, ob die Wärmeenergie auf eine sparsame oder verschwenderische Weise bezogen wurde.

Aus der DE 36 17 061 ist eine Brauchwasserheizung bekannt, die einerseits das Wasser im Vorlauf aufgrund des Bezugs von Wärmemenge regelt und andererseits die von verschiedenen Bezügern bezogene Wärmeenergie separat erfasst.

Aus der DE 36 08 689 ist ein Verfahren zum Ermitteln und Anzeigen der Effektivität eines Wärmeerzeugers bekannt, indem ein Rechner einen Istwert mit einem Sollwert vergleicht und das Vergleichsergebnis kenntlich macht. Das Verfahren dient dazu, Verschlechterungen im Betrieb des Wärmeerzeugers, die eine Wartung angezeigt scheinen lassen, zu erkennen.

Der Erfindung liegt die Aufgabe zugrunde, einen Wärmezähler der eingangs genannten Gattung dahingehend zu verbessern, daß energiesparende Maßnahmen ergriffen werden können. Hierdurch soll der Wärmeverbraucher zur sparsamen Energienutzung erzogen werden.

Die Erfindung ist in den Patentansprüchen 1 und 2 beansprucht und in Unteransprüchen sind weitere Ausbildungen derselben gekennzeichnet. Eine besonders vorteilhafte Verwendung der Erfindung ist im Patentanspruch 9 beansprucht.

Die Erfindung ermöglicht, daß die beim Bezug von Wärmeenergie aus beispielsweise einem Fernwärmenetz gemessenen Daten aufbereitet und zur Ablesung oder umgehenden Weiterverarbeitung derart bereitgehalten werden können, daß dem Anbieter wie dem Bezieher solcher Fernwärme ein energiesparsamer Betrieb der Anlage möglich ist. Die Erfindung ist jedoch nicht auf die Anwendung in Fernwärmenetzen beschränkt.

Ausführungsbeispiele der Erfindung werden im folgenden anhand der Zeichnung näher erläutert. Dabei zeigen:

Figur 1      eine Fernwärmeleitung mit einem Wärmezähler und

Figur 2      einen Wärme zähler mit einem in Funktionsverbindung zu diesem gebrachten Heizungsregler.

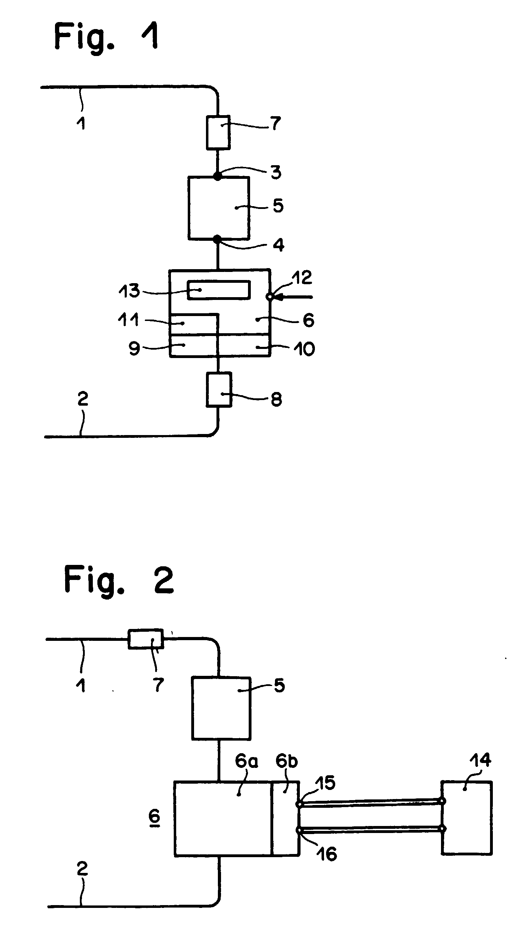

Gemäß Figur 1 weist das Fernwärmenetz einen Vorlauf 1 und einen Rücklauf 2 auf, die mit dem Eingang 3 bzw. Ausgang 4 eines Wärmetauschers 5 in Verbindung stehen. In den Rücklauf 2 ist nach dem Ausgang 4 des Wärmetauschers 5 ein Wärmezähler 6 eingebaut, der in bekannter Weise das durch ihn fließende Durchflußvolumen $V_m$ des strömenden Heizmediums im Fernwärmenetz sowie mittels Temperaturfühler 7 und 8 die IST-Temperaturen $T_V$ des Vorlaufs 1 und $T_{Rist}$ des Rücklaufs 2 erfaßt. Falls der Wärmezähler 6 im Rücklauf 2 eingebaut ist, kann der Temperaturfühler 8 auch Bestandteil des Wärmezählers 6 sein. Dieser weist wenigstens zwei Speicherzellen 9 und 10 auf. Fakultativ sind weitere Speicherzellen 11 und ein Steuereingang 12 vorhanden. Ferner enthält der Wärmezähler 6 eine Anzeigevorrichtung 13.

In einer ersten Ausführung dient die Speicherzelle 9 in bekannter Weise der Speicherung der kumulierten Energie $E_1$, d.h. dem zeitlichen Integral

$$E_1 = \int_{t_0}^{t} V_m(x) * [T_V(x) - T_{Rist}(x)] * k(T_V, T_{Rist}) \, dx,$$

wobei k den Wärmekoeffizienten, $t_0$ einen beliebigen, vorbestimmten Zeitpunkt, z.B. den Beginn einer Verrechnungsperiode, und t den aktuellen Zeitpunkt bezeichnen. Der Wärmekoeffizient k hängt im allgemeinen ab von der Vorlauftemperatur $T_V$, der Rücklauftemperatur $T_{Rist}$ und der Temperatur $T_M$ des Strömungsmediums am Ort der Durchflussmessung: $k = k(T_V, T_{Rist}, T_M)$. Im gewählten Beispiel gilt $T_M = T_{Rist}$. In der Regel wird der Wärmekoeffizient k durch Interpolation aus tabellarisch im Wärmezähler 6 gespeicherten Werten in Funktion der aktuellen Temperaturen $T_V$ und $T_{Rist}$ berechnet.

Die Speicherzelle 10 dient der Speicherung einer Grösse $E_2$, die ein Mass für ungenutzte Energie darstellt, welche zwar durch den Wärmetauscher 5 transportiert, aber nicht aus dem Fernwärmenetz entnommen wird. Diese ungenutzte Energie $E_2$ ist proportional zur Temperaturdifferenz zwischen der gemessenen Ist-Rücklauftemperatur $T_{Rist}$ und einer minimal möglichen Soll-Rücklauftemperatur $T_{Rsoll}$:

$$E_2 = \int_{t_0}^{t} V_m(x)*[T_{Rist}(x) - T_{Rsoll}(x)]*k(T_{Rist}, T_{Rsoll})\,dx$$

Die Soll-Rücklauftemperatur $T_{Rsoll}$ ist als vorbestimmter Wert fest eingestellt oder über den gegebenenfalls vorhandenen Steuereingang 12 parametrierbar. Die Erfassung dieser ungenutzten Energie $E_2$ bietet den Vorteil, dass der Anbieter der Wärmeenergie Angaben darüber erhält, ob ein Bezüger seine Wärmeenergie $E_1$ effizient bezieht. Wenn nämlich mehrere Bezüger einen hohen Anteil ungenutzter Energie $E_2$ aufweisen, kann dies zu Kapazitätsproblemen des Fernwärmenetzes führen. Durch geeignete Einflussnahme des Wärmelieferanten auf solche Bezüger oder auch durch entsprechende Preisbildung kann der Wärmelieferant einen optimalen Betrieb seines Fernwärmenetzes erzielen und somit einen an sich unnötigen und teuren Ausbau des Netzes vermeiden. Weiter kann es vorgesehen sein, den momentanen Anteil der ungenutzten Wärmeenergie im Verhältnis zur momentan bezogenen Wärmeenergie beispielsweise mit einer Prozentzahl oder mit der Länge eines Balkens auf der Anzeigevorrichtung 13 sichtbar anzuzeigen. Diese Anzeige ist vor allem für den Bezüger der Wärmeenergie interessant.

In einer zweiten Ausführung dienen die beiden Speicherzellen 9 und 10 der Speicherung bezogener Wärmeenergiemengen $F_1$ und $F_2$, wobei beim Bezug unterschieden wird, ob die Differenz $\Delta T$ zwischen der Vorlauftemperatur $T_V$ und der Ist-Rücklauftemperatur $T_{Rist}$ kleiner oder grösser als ein vorbestimmter Wert $\Delta T_p$ ist. Die bezogene Wärmeenergie wird also immer dann zum Inhalt der Speicherzelle 9 addiert wird, wenn die Differenz $\Delta T$ kleiner als der Wert $\Delta T_p$ ist. Sie wird hingegen zum Inhalt der Speicherzelle 10 addiert, wenn die Differenz $\Delta T$ grösser oder gleich dem Wert $\Delta T_p$ ist. Es gilt also

$$F_1 = \int_{t_0}^{t} V_m(x)*[T_V(x) - T_{Rist}(x)]*k(T_V, T_{Rist})\,dx,$$

für Zeiten x, wo $\Delta T < \Delta T_p$

$$F_2 = \int_{t_0}^{t} V_m(x)*[T_V(x) - T_{Rist}(x)]*k(T_V, T_{Rist})\,dx,$$

für Zeiten x, wo $\Delta T \geq \Delta T_p$

In einem Fernwärmenetz ist die Vorlauftemperatur $T_V$ selten eine konstante Grösse, sondern sie hängt von verschiedenen Faktoren wie Ort, Wetterverhältnissen, Wärmebedarf der einzelnen Bezüger etc. ab. Beispielsweise beträgt die Vorlauftemperatur $T_V$ beim Verlassen der zentralen Heizungsanlage des Fernwärmenetzes bei kalter Witterung 100°C, bei warmer Witterung 80°C, während die Werte bei einem von der zentralen Heizungsanlage weit entfernten Bezüger um einige Grad tiefer sein können. Der Wert $\Delta T_p$ wird deshalb mit Vorteil in Funktion der Vorlauftemperatur $T_V$ kontinuierlich nachgeführt, so dass $\Delta T_p = f(T_V)$ gilt. Beispielsweise kann die Funktion $f(T_V)$ derart sein, dass $f(T_V) = T_V - T_{Rsoll} - \Delta T_1$, wobei $\Delta T_1$ einen konstanten, jedoch veränderbaren Wert darstellt. Auf diese Weise ist es möglich, die bezogene Wärmeenergie in der Speicherzelle 9 zu kumulieren, falls die Differenz zwischen der Ist- und der Soll-Rücklauftemperatur grösser als der eingestellte Wert $\Delta T_1$ ist, bzw. in der Speicherzelle 10, falls die Differenz zwischen der Ist- und der Soll-Rücklauftemperatur kleiner oder gleich dem eingestellten Wert $\Delta T_1$ ist. Ein besonders komfortabler Wärmezähler 6 weist den Steuereingang 12 auf über den der Parameter $\Delta T_1$ jederzeit neu einstellbar ist. Die kumulierte Wärmeenergiemenge $E_1$ ist erhältlich durch Addition der Werte $F_1$ und $F_2$:

$$E_1 = F_1 + F_2.$$

Aufgrund von gesetzlichen Vorschriften kann es erforderlich sein, dass die kumulierte Wärmeenergie $E_1$ in einer vorgegebenen Speicherzelle, z.B. der Speicherzelle 9 abgelegt ist. Es ist jedoch ohne weiteres möglich, anstelle der Speicherung der Werte $F_1$ und $F_2$ und der Berechnung der Wärmeenergie $E_1$ die Wärmeenergie $E_1$ und den Wert $F_1$ zu speichern und bei Bedarf den Wert $F_2$ zu berechnen. Bei einer vorteilhaften Ausführung des Wärmezählers 6 ist es auf der Anzeigevorrichtung 13 ersichtlich, in welche der Speicherzellen 9 oder 10 die momentan bezogene Wärmeenergie kumuliert wird.

Mit Vorteil ist im Wärmezähler 6 eine dritte Speicherzelle 11 vorgesehen zur Speicherung des sogenannten maximalen Stunden-Durchflussvolumens $V_{max}$. Dazu bestimmt der Wärmezähler 6 laufend das über eine Stunde gemittelte Durchflussvolumen $V_h$. Der Wert $V_h$ wird dann in der Speicherzelle 11 als Wert $V_{max}$ abgelegt, falls der Wert $V_h$ grösser als der in der Speicherzelle 11 vorhandene Wert $V_{max}$ ist. Die Erfassung des maximalen Stunden-Durchflussvolumens $V_{max}$ bietet gegenüber der bekannten Erfassung der maximalen Stunden-Leistung den Vorteil, dass auch der Anteil ungenutzter Energie $E_2$ einbezogen ist.

Bei jeder der beschriebenen Ausführungsarten des Wärmezählers 6 sind die vorgängig erwähnten Grössen $E_1$, $E_2$, $F_1$, $F_2$ und $V_{max}$ mittels der Anzeigevorrichtung 13 anzeigbar und/oder über eine Ausleseschnittstelle beispielsweise mit einem Handterminal auslesbar und/oder über einen Bus an ein übergeordnetes Gerät übermittelbar. Es ist auch möglich, in einem Wärmezähler 6 alle oder eine ausgewählte Kombination der vorstehend beschriebenen Werte $E_1$, $E_2$, $F_1$, $F_2$ und $V_{max}$ abzuspeichern.

In einer dritten Ausführung sind wenigstens zwei Sätze von Speicherzellen vorgesehen. Dabei wird mittels einer im Wärmezähler 6 eingebauten, programmierbaren Schaltuhr oder über den Steuereingang 12, der mit einer Leitzentrale verbunden ist, mittels eines von der Leitzentrale abgesetzten Rundsteuerbefehles festgelegt, in welchen Satz Speicherzellen die momentan gemessenen Energie- und Durchflusswerte wie z.B. $E_1$, $E_2$, $F_1$, $F_2$ und $V_{max}$ aufaddiert werden. So ist es dem Betreiber des Fernwärmenetzes möglich, Angaben darüber zu erhalten, welche Kunden viel Wärmeenergie während Zeiten beziehen, an denen gesamthaft ein grosser Bedarf an Wärmeenergie besteht. Ein grosser Wärmebedarf besteht z.B. am Montagmorgen, falls viele Bürogebäude aufgeheizt werden müssen, deren Temperatur über das Wochenende abgesenkt wurde.

Eine andere Verwendung mehrerer Sätze von Speicherzellen ermöglicht es, dass gemessene Energie- und Durchflusswerte wie $E_1$, $E_2$, $F_1$, $F_2$ und $V_{max}$ für vorbestimmte Perioden getrennt pro Periode, beispielsweise pro Monat, speicherbar sind. Bei einer jährlich einmal stattfindenden Ablesung des Wärmezählers 6 erhalten dann sowohl Anbieter wie Bezüger der Wärme Informationen darüber, wann und auf welche Weise wieviel Wärmeenergie bezogen worden ist. Diese Information kann zur Preisbildung benützt werden. So ist es z.B. möglich, für die Sommer- und Wintersaison verschiedene Tarife anzuwenden.

Um einen Wärmezähler ausserhalb des Privatbereiches ablesen zu können oder auch zur Realisierung anderer Funktionen, ist der Wärmezähler vorteilhaft mit einem übergeordneten Gerät verbindbar. Das übergeordnete Gerät kann Teil eines Gebäudeleitsystems sein. Das übergeordnete Gerät kann auch einzig vorgesehen sein zur zentralen Auslesung mehrerer Wärmezähler. Dazu verfügt es beispielsweise über eine feste Ahzähl von Speicherregistern und Leuchtdioden, wobei einem angeschlossenen Wärmezähler ein Speicherregister und eine Leuchtdiode zugeordnet sind. In einer einfachen Ausführung ist der Wärmezähler dazu mit einem Modul bestückbar, das über einen Ausgang zur Übertragung der kumulierten Energie $E_1$ und über einen Fehlerausgang verfügt. Die beiden Ausgänge des Moduls sind beispielsweise als Punkt-Punkt Verbindung über je eine Zweidrahtleitung mit dem übergeordneten Gerät verbunden. Mit Vorteil ist jeder Ausgang mit einem Optokoppler versehen, der ausgangsseitig vom übergeordneten Gerät über die entsprechende Zweidrahtleitung gespeist ist, so dass die Übertragung der Informationen galvanisch getrennt und für den Wärmezähler energiesparsam erfolgt.

Der Wärmezähler sendet beispielsweise einen Impuls pro bezogener Energiemenge, welcher beim übergeordneten Gerät in das entsprechende Speicherregister addiert wird. Das Speicherregister kann ein mechanisches Zählwerk sein, sodass die kumulierte Energie $E_1$ des dazugehörigen Wärmezählers jederzeit von Auge auslesbar ist. Solange der Wärmezähler fehlerfrei arbeitet, schickt er über den Fehlerausgang laufend Impulse, beispielsweise mit einer Frequenz von einem Hertz, welche dazu führen, dass die entsprechende Leuchtdiode des übergeordneten Gerätes blinkt. Beim Auftreten eines ernsthaften Fehlers stoppt der Wärmezähler die Übertragung von Fehlerimpulsen, so dass die Leuchtdiode nicht mehr blinkt. Am übergeordneten Gerät ist somit ein Fehler im Wärmezähler ohne irgendwelche Logikschaltung sofort sichtbar. Die aktive Ausführung der Fehlerübertragung bietet zudem die Vorteile, dass auch ein Ausfall der Energieversorgung des Wärmezählers oder ein Kurzschluss in der Zweidrahtleitung bewirken, dass die entsprechende Leuchtdiode nicht mehr blinkt. In der CH-Patentanmeldung mit der Nummer 1032/94-9 ist eine Ausgangsschaltung mit einem Optokoppler der oben erwähnten Art beschrieben, deren Energieverbrauch so gering ist, dass trotz der ständigen Übertragung von Impulsen ein batteriebetriebener Wärmezähler ohne Batteriewechsel über mehrere Jahre betreibbar ist. Falls das übergeordnete Gerät zu einem Gebäudeleitsystem gehört, ist beim Fehlen von Impulsen am Fehlerausgang ein Alarm auslösbar.

Die Fig. 2 zeigt einen Wärmezähler 6, der zusätzlich zu seiner angestammten Aufgabe der Erfassung bezogener Wärmeenergie als Sensor für einen auf den Wärmetauscher 5 einwirkenden Heizungsregler 14 dient. Der Wärmezähler 6 besteht vorzugsweise aus einem Grundgerät 6a und einem aufgesteckten Modul 6b, welches einen ersten Ausgang 15 zur Übermittlung des momentanen Volumendurchflusses $V_m$ und einen zweiten Ausgang 16 zur Übermittlung der momentanen Differenz $\Delta T$ zwischen der Temperatur $T_V$ des Vorlaufs 1 und der Temperatur $T_{Rist}$ des Rücklaufs 2 aufweist. Die Ausgänge 15 und 16 sind beispielsweise als Punkt-Punkt Verbindung über je eine Zweidrahtleitung mit dem Heizungsregler 14 verbunden. Zur galvanischen Trennung ist mit Vorteil jeder Ausgang 15 bzw. 16 als optische Schnittstelle ausgebildet, die ausgangsseitig vom Heizungsregler 14 über die entsprechende Zweidrahtleitung gespeist ist. In einer einfachen Ausführung erfolgt die Übermittlung der Werte $V_m$ und $\Delta T$ unkodiert in Form von Impulspaketen, wobei jeder Impuls ein bestimmtes Volumen bzw. eine bestimmte Anzahl Grad darstellt. Die Dauer der Impulse ist so zu bemessen, dass sie über eine vorgegebene Länge der Zweidrahtleitung fehlerfrei übertragen werden. Als günstig erweisen sich beispielsweise Impulse mit einer Dauer von 15 - 25 Millisekunden, die durch Pausen von etwa gleicher Dauer getrennt sind. Die Übermittlung einer Temperaturdifferenz $\Delta T$ von 120 K dauert dann zwischen 3.6 und 6 Sekunden, so dass ein neuer Wert alle fünf bis zehn Sekunden übermittelt werden kann. Es ist vorgesehen, die Übermittlung des momentanen Durchflussvolumens mit einer höheren Rate, z.B. jede Sekunde, durchzuführen. Der Wert eines Impulses für das momentane Volumen $V_m$ ist somit in Abhängigkeit des maximalen Durchflussvolumens in ähnlicher Weise bestimmbar. Aufeinanderfolgende Impulspakete sind durch eine Impulslücke getrennt, die deutlich langer als die Pause zwischen zwei aufeinanderfolgenden Impulsen ist, so dass Beginn und Ende eines Impulspaketes vom Heizungsregler 14 auf einfache Weise feststellbar sind. Der übermittelte Wert ist zudem vom Heizungsregler 14 durch einen einfachen Zählvorgang erfassbar. Ein im Wärmezähler 6 festgestellter Fehler, der nicht länger als eine vorbestimmte Zeit dauert, ist für den Heizungsregler 14 nicht erkennbar, da der Wärmezähler 6 in einem solchen Fall den letzten korrekt erfassten Messwert $V_m$ bzw. $\Delta T$ wiederholt übermittelt. Für den Fall eines länger andauernden Fehlers ist vorgesehen, dass der Wärmezähler 6 die Übermittlung von Impulspaketen unterbricht, so dass das Vorhandensein eines Fehlers vom Heizungsregler 14 erkennbar ist. Die beschriebene Art der Übermittlung von Werten für den momentanen Volumendurchfluss $V_m$ und die momentane Differenz $\Delta T$ bietet die Vorteile, dass die Übertragung regelungsrelevanter Daten auf einfache Weise, in relativ kurzer Zeit und mit der erforderlichen hohen Auflösung erfolgen kann. Der Heizungsregler 14 ist so programmiert, dass die Temperaturdifferenz $\Delta T$ am Wärmetauscher 5 möglichst gross wird, so dass der Anteil der durch den Wärmetauscher 5 fliessenden ungenutzten Energie $E_2$ möglichst klein wird. Der Wärmezähler 6 kann auch statt mit dem Heizungsregler 14 mit einem übergeordneten Gerät eines Gebäudeleitsystems verbunden sein.

**Patentansprüche**

1. Wärmezähler (6) zum Ermitteln des Wärmeenergieverbrauchs, zu dem Wärmeenergie mittels eines Heizmediums von einer Wärmeenergiequelle längs einer Vorlaufleitung (1) gelangt und von dem das Heizmedium über eine Rücklaufleitung (2) insbesondere zur Wärmeenergiequelle gelangt, durch Erfassen von durch das Heizmedium transportierter Wärmeenergiemenge (E1) in einer Speicherzelle (9) unter Verwendung von Meßwerten der Vorlauftemperatur ($T_V$) des in der Vorlaufleitung (1) fließenden und der Rücklauftemperatur ($T_R$) des in der Rücklaufleitung (2) fließenden Heizmediums,
**dadurch gekennzeichnet,**
daß der Wärmezähler (6) mindestens zwei Speicherzellen (9,10,11) aufweist, von denen eine Speicherzelle (9) zur Erfassung derjenigen vom Wärmeverbraucher (5) genutzten ersten Wärmeenergie (F1) dient, bei der die Differenz $\Delta T$ zwischen der Vorlauftemperatur $T_V$ und dem Istwert $T_{Rist}$ der Rücklauftemperatur kleiner als ein Wert $\Delta T_p$ ist, während eine andere Speicherzelle (10) zur Erfassung derjenigen vom Wärmeverbraucher (5) genutzten zweiten Wärmeenergie (F2) dient, bei der die Differenz $\Delta T$ zwischen der Vorlauftemperatur $T_V$ und dem Istwert $T_{Rist}$ der Rücklauftemperatur größer als der oder gleich dem Wert $\Delta T_p$ ist.

2. Wärmezähler (6) zum Ermitteln des Wärmeenergieverbrauchs, zu dem Wärmeenergie mittels eines Heizmediums von einer Wärmeenergiequelle längs einer Vorlaufleitung (1) gelangt und von dem das Heizmedium über eine Rücklaufleitung (2) insbesondere zur Wärmeenergiequelle gelangt, durch Erfassen von durch das Heizmedium transportierter Wärmeenergiemenge (E1) in einer Speicherzelle (9) unter Verwendung von Meßwerten der Vorlauftemperatur ($T_V$) des in der Vorlaufleitung (1) fließenden und der Rücklauftemperatur ($T_R$) des in der Rücklaufleitung (2) fließenden Heizmediums,

**dadurch gekennzeichnet,**

daß der Wärmezähler (6) mindestens eine zweite Speicherzelle (10) aufweist, die zur zusätzlichen Erfassung von den Wärmeverbraucher (5) passierender, von diesem aber ungenutzter Wärmeenergie (E2) dient, welche sich aus Meßwerten ergibt, die in Bezug zu einem minimal möglichen Sollwert $T_{Rsoll}$ der Rücklauftemperatur gesetzt sind.

3. Wärmezähler (6) nach Anspruch 1,

**dadurch gekennzeichnet,**

daß eine Einrichtung den Wert $\Delta T_p$ kontinuierlich in Funktion der Vorlauftemperatur $T_V$ bildet.

4. Wärmezähler (6) nach Anspruch 3,

**dadurch gekennzeichnet,**

daß ein Rechner den Wert $\Delta T_p$ als $T_p = T_V - T_{Rsoll} - \Delta T_1$ berechnet, wobei $T_{Rsoll}$ eine fest eingestellte Soll-Rücklauftemperatur und $\Delta T_1$ eine feste oder eine über einen Steuereingang (12) veränderbare Temperaturdifferenz bezeichnen.

5. Wärmezähler (6) nach einem der Ansprüche 1-4,

**dadurch gekennzeichnet,**

daß eine Speicherzelle (11) den in einer vorbestimmten Zeitspanne gemessenen maximalen Wert des Durchflußvolumens ($V_{max}$) speichert.

6. Wärmezähler (6) nach einem der vorhergehenden Ansprüche,

**dadurch gekennzeichnet,**

daß mehrere Sätze von Speicherzellen (9,10,11) mit der Maßgabe angewendet sind, daß eine Schaltuhr nach einem vorbestimmtem Zeitprogramm und/oder ein Steuereingang (12) einen bestimmten Satz von Speicherzellen (9,10,11) zur momentanen Speicherung der gemessenen Werte der Wärmeenergiemengen ($E_1$, $E_2$; $F_1$, $F_2$) und/oder Durchflußwerte ($V_{max}$) steuert.

7. Wärmezähler (6) nach einem der vorhergehenden Ansprüche,

**dadurch gekennzeichnet,**

daß mehrere Sätze von Speicherzellen (9,10,11) mit der Maßgabe angewendet sind, daß die über vorbestimmte Perioden kumulierten Werte der Wärmeenergiemengen ($E_1$, $E_2$; $F_1$, $F_2$) und/oder Durchflußwerte ($V_{max}$) für jede Periode getrennt erfaßbar sind.

8. Wärmezähler (6) nach einem der vorhergehenden Ansprüche,

**dadurch gekennzeichnet,**

daß ein Ausgang (15) zur Übermittlung der Differenz $\Delta T$ und/oder ein Ausgang (16) zur Übermittlung des momentanen Durchflußvolumens ($V_{max}$) an einen Heizungsregler (14) und/oder an ein übergeordnetes Gerät verwendet sind.

9. Verwendung des Wärmezählers (6) nach einem der vorhergehenden Ansprüche bei einer einen Heizungsregler (14) aufweisenden Einrichtung mit der Maßgabe, daß der Wärmezähler die Differenz $\Delta T$ am Wärmeverbraucher (5) an den Heizungsregler (14) übermittelt und diese den Wärmeverbraucher (5) derart steuert, daß diese Differenz $\Delta T$ möglichst groß ist.

## Claims

1. A calorimeter (6) for ascertaining the level of heat energy consumption, to which heat energy passes by means of a heating medium from a heat energy source along a flow line (1) and from which the heating medium passes by way of a return line (2) in particular to the heat energy source, by ascertaining an amount of heat energy (E1) transported by the heating medium in a storage cell (9) using measurement values in respect of the flow temperature ($T_V$) of the heating medium flowing in the flow line (1) and the return temperature ($T_R$) of the heating medium flowing in the return line (2), characterised in that the calorimeter (6) has at least two storage cells (9, 10, 11) of which one storage cell (9) serves to detect that first heat energy (F1) used by the heat consumer (5), in respect of which the difference $\Delta T$ between the flow temperature $T_V$ and the actual value $T_{Rist}$ of the return temperature is smaller than a value $\Delta T_P$, while another storage cell (10) serves to detect that second heat energy (F2) used by the heat consumer (5), in respect of which the difference $\Delta T$ between the flow temperature $T_V$ and the actual value $T_{Rist}$ of the return temperature is greater than or equal to the value $\Delta T_p$.

2. A calorimeter (6) for ascertaining the level of heat energy consumption, to which heat energy passes by means of a heating medium from a heat energy source along a flow line (1) and from which the heating medium passes by way of a return line (2) in particular to the heat energy source, by ascertaining an amount of heat energy (E1) transported by the heating medium in a storage cell (9) using measurement values in respect of the flow temperature ($T_V$) of the heating medium flowing in the flow line (1) and the return temperature ($T_R$) of the heating medium flowing in the return line (2), characterised in that the calorimeter (6) has at least one second storage cell (10) which serves for additionally detecting heat energy (E2) which passes the heat consumer (5) but which is unused thereby and which results from measurement values which are related to a minimum possible reference value $T_{Rsoll}$ of the return temperature.

3. A calorimeter (6) according to claim 1 characterised in that a means forms the value $\Delta T_p$ continuously in dependence on the flow temperature $T_V$.

4. A calorimeter (6) according to claim 3 characterised in that a computer computes the value $\Delta T_p$ as $T_p = T_V - T_{Rsoll} - \Delta T_1$ wherein $T_{Rsoll}$ denotes a fixedly set reference return temperature and $\Delta T_1$ denotes a fixed temperature difference or a temperature difference which is variable by way of a control input (12).

5. A calorimeter (6) according to one of claims 1-4 characterised in that a storage cell (11) stores the maximum value, as measured in a predetermined period of time, of the through-flow volume ($V_{max}$).

6. A calorimeter (6) according to one of the preceding claims characterised in that a plurality of sets of storage cells (9, 10, 11) are used with the proviso that a time switch controls a given set of storage cells (9, 10, 11) in accordance with a predetermined time program and/or a control input (12) for the instantaneous storage of the measured values of the amounts of heat energy ($E_1$, $E_2$; $F_1$, $F_2$) and/or through-flow values ($V_{max}$).

7. A calorimeter (6) according to one of the preceding claims characterised in that a plurality of sets of storage cells (9, 10, 11) are used with the proviso that the values, which are accumulated over predetermined periods, of the amounts of heat energy ($E_1$, $E_2$; $F_1$, $F_2$) and/or through-flow values ($V_{max}$) can be detected separately for each period.

8. A calorimeter (6) according to one of the preceding claims characterised in that an output (15) is used for transmitting the difference $\Delta T$ to a heating regulator (14) and/or to a higher-level unit and/or an output (16) is used for transmitting the instantaneous through-flow volume ($V_{max}$) to the heating regulator (14) and/or to the higher-level unit.

9. Use of the calorimeter (6) according to one of the preceding claims in an apparatus having a heating regulator (14) with the proviso that the calorimeter transmits the difference $\Delta T$ at the heat consumer (5) to the heating regulator (14) and it controls the heat consumer (5) in such a way that said difference $\Delta T$ is as large as possible.

## Revendications

1. Compteur de chaleur (6) pour déterminer la consommation d'énergie thermique, auquel de l'énergie thermique parvient d'une source d'énergie thermique, au moyen d'un fluide chauffant, le long d'une conduite d'arrivée (1) et duquel le fluide chauffant parvient, par une conduite de retour (2), en particulier à la source d'énergie thermique, par saisie, dans une cellule de mémoire (9), de la quantité d'énergie thermique ($E_1$) transportée par le fluide chauffant, en utilisant des valeurs de mesure de la température d'arrivée ($T_V$) du fluide chauffant qui s'écoule dans la conduite d'arrivée (1) et de la température de retour (TR) du fluide chauffant qui s'écoule dans la conduite de retour (2),

caractérisé par le fait que le compteur de chaleur (6) présente au moins deux cellules de mémoire (9, 10, 11) dont une cellule de mémoire (9) sert à saisir la première énergie thermique (F1), utilisée par le consommateur de chaleur (5), pour laquelle la différence $\Delta T$ entre la température d'arrivée TV et la valeur réelle $T_{Rist}$ de la température de retour est inférieure à une valeur $\Delta T_p$, tandis qu'une autre cellule de mémoire (10) sert à saisir la seconde énergie thermique (F2), utilisée par le consommateur de chaleur (5), pour laquelle la différence $\Delta T$ entre la température d'arrivée $T_V$ et la valeur réelle $T_{Rist}$ de la température de retour est supérieure ou égale à la valeur

$\Delta T_p$.

2. Compteur de chaleur de chaleur (6) pour déterminer la consommation d'énergie thermique, auquel de l'énergie thermique parvient d'une source d'énergie thermique, au moyen d'un fluide chauffant, le long d'une conduite d'arrivée (1) et duquel le fluide chauffant parvient, par une conduite de retour (2), en particulier à la source d'énergie thermique, par saisie, dans une cellule de mémoire (9), de la quantité d'énergie thermique ($E_1$) transportée par le fluide chauffant, en utilisant des valeurs de mesure de la température d'arrivée ($T_V$) du fluide chauffant qui s'écoule dans la conduite d'arrivée (1) et de la température de retour ($T_R$) du fluide chauffant qui s'écoule dans la conduite de retour (2),

   caractérisé par le fait que le compteur de chaleur (6) présente au moins une seconde cellule de mémoire (10) qui sert à saisir en outre l'énergie thermique (E2) qui est passée dans le consommateur de chaleur (5) mais n'a pas été utilisée par lui et qui résulte de valeurs de mesure qui sont définies par rapport à une valeur prescrite minimale possible TRsoll de la température de retour.

3. Compteur de chaleur (6) selon la revendication 1,
   caractérisé
   par le fait qu'un dispositif forme en continu la valeur $\Delta T_p$ en fonction de la température d'arrivée $T_V$.

4. Compteur de chaleur (6) selon la revendication 3,
   caractérisé
   par le fait qu'un calculateur calcule la valeur $\Delta T_p$ sous la forme $T_p = T_V - T_{Rsoll} - \Delta T_1$, $T_{Rsoll}$ désignant une température de retour prescrite et $\Delta T_1$ une différence de température fixe ou variable au moyen d'une entrée de commande (12).

5. Compteur de chaleur (6) selon l'une des revendications 1-4,
   caractérisé
   par le fait qu'une cellule de mémoire (11) mémorise la valeur maximale, mesurée en intervalle de temps prédéterminé, du débit volumique ($V_{max}$).

6. Compteur de chaleur (6) selon l'une des revendications précédentes,
   caractérisé
   par le fait que l'on emploie plusieurs ensembles de cellules de mémoire (9,10,11) avec l'obligation qu'une minuterie, après un programme chronométrique prédéterminé, et/ou une entrée de commande (12) commande un ensemble déterminé de cellules de mémoire (9,10,11) pour la mémorisation momentanée des valeurs mesurées des quantités d'énergie thermique ($E_1$, $E_2$; $F_1$, $F_2$) et/ou des valeurs du débit ($V_{max}$).

7. Compteur de chaleur (6) selon l'une des revendications précédentes,
   caractérisé
   par le fait que l'on emploie plusieurs ensembles de cellules de mémoire (9,10,11) avec l'obligation que les valeurs, cumulées pendant des périodes prédéterminées, des quantités d'énergie thermique ($E_1$, $E_2$; $F_1$, $F_2$) et/ou des valeurs du débit ($V_{max}$) puissent être saisies séparément pour chaque période.

8. Compteur de chaleur (6) selon l'une des revendications précédentes,
   caractérisé
   par le fait que l'on emploie un signal de sortie (15) pour transmettre la différence $\Delta T$ et/ou un signal de sortie (16) pour transmettre le débit volumique momentané ($V_{max}$) à un régulateur de chauffage (14) et/ou à un appareil d'ordre supérieur.

9. Emploi du compteur de chaleur (6) selon l'une des revendications précédentes dans le cas d'un dispositif présentant un régulateur de chauffage (14) avec l'obligation que le compteur de chaleur transmette la différence $\Delta T$ relative au consommateur de chaleur (5), au régulateur de chauffage (14) et que cette différence commande le consommateur de chaleur (5) de façon que cette différence $\Delta T$ soit la plus importante possible.

# Fig. 1

# Fig. 2